# EUROPEAN PATENT APPLICATION

(11) **EP 2 445 202 A1**
(43) Date of publication of application: **25.04.2012**
(21) Application number: 09845968.8
(22) Date of filing: 19.06.2009
(51) Int. Cl.: H04N 5/445, H04N 5/761

(54) **METHOD AND TV SET FOR INDICATING PLAYING PROGRESS OF TIME-SHIFT TV**

(71) Applicant: Shenzhen TCL New Technology Co., LTD, Nanshan District Shenzhen Guangdong 518067 (CN)
(72) Inventor: HAN, Qing, Shenzhen Guangdong 518067 (CN); FU, Yaoyuan, Shenzhen Guangdong 518067 (CN); YANG, Yingying, Shenzhen Guangdong 518067 (CN); LI, Meng, Shenzhen Guangdong 518067 (CN)
(74) Representative: Manitz, Finsterwald & Partner GbR
(86) International application number: PCT/CN2009/000678
(87) International publication number: WO 2010/145054

(57) **Abstract**

The present invention provides a playing progress indicating method for time-shifted television and a TV set, which can calculate a time value indicated by a program time-shifted progress indicia by use of a time scaling unit and provide a very intuitive time progress indicator for a user. Therefore, the playing progress indicating method for time-shifted television and the TV set of the present invention are intuitive and convenient to use.

## Description

### BACKGROUND

### 1. Technical Field

This invention relates to the field of television, and more particularly, to a technology for indicating a playing progress of time-shifted television.

### 2. Description of Related Art

With rapid development of multimedia technologies, multimedia playing progress indicators have been widely used to indicate playing progresses of audio & video (AV) programs (e.g., television programs, movies and music pieces) and are now gradually used to indicate network download progresses and local playing progresses simultaneously.

When a multimedia playing progress indicator is used to indicate a playing progress of an AV program, a strip-like multimedia playing progress bar is displayed on a screen to indicate a total time length of the multimedia playing process and also a time length for which the multimedia has been played. On the other hand, when the multimedia playing progress indicator is used to indicate a network download progress and a local playing progress, the network download progress is also indicated in addition to the time length for which the multimedia has been played and the total time length of the multimedia playing process; and meanwhile, an adjustment lever for adjusting a playing position is provided so that content currently played can be changed as desired within the scope of the already downloaded data. The latter way is used very widely in various video websites.

On the other hand, time-shifted television is a kind of new television technology. As compared with the conventional television technologies, the time-shifted television technology can overcome the strict time limitation of common television programs (i.e., the audience must watch a program within a specified time period exactly but cannot suspend the television program) and allows the audience to watch a program out of a specified time period. For example, if a user has to deal with something urgent when a program he is interested has just started, he may suspend the program and then the TV set will save the subsequent playing content of the program automatically for the user to watch later. In this way, shifting the time of broadcasting the live program is achieved, and it is convenient for the user to watch those live programs at any moment. With advancement of the time-shifted television technology, an urgent need exists in the art to provide a multimedia playing progress indicator for time-shifted television.

### BRIEF SUMMARY

The objective of the present invention is to provide a playing progress indicating method for time-shifted television and a TV set.

The present invention provides a playing progress indicating method for time-shifted television, comprising the following steps of:
step a: displaying a television program time axis which indicates a total time length of playing program contents;
step b: displaying a television program playing progress bar in the television program time axis, wherein the television program playing progress bar indicates a progress of playing carried out by a TV set according to related data transmitted by a television station when it is time to play a television program; and
step c: displaying a program time-shifted progress indicia in the television program playing progress bar, wherein a time corresponding to the program time-shifted progress indicia is a time value calculated by the TV set according to a length of data that has been played.

Preferably, the program playing progress bar is a strip-like displaying region on the television program time axis.

Preferably, the program time-shifted progress indicia is a program time-shifted progress pointer, and the time corresponding to the program time-shifted progress pointer is a time value calculated by the TV set according to the length of data that has been played.

Preferably, the program time-shifted progress indicia is a time-shifted program playing progress bar, of which one end represents a time point where a user activates a time-shifted recording function and the other end represents a time value calculated by the TV set according to the length of data that has been played.

The present invention further provides a TV set, which comprises an MCU, and a program recording module and a storage unit controlled by the MCU. The program recording module is configured to back up received audio & video (AV) TV data into the storage unit according to an instruction from a user. The TV set further comprises a time scaling unit configured to calculate a time value according to a current time and a length of data that has been played.

Preferably, the TV set further comprises:
a tuner, being configured to choose a desired channel from a number of channels under the control of the MCU.

Preferably, the TV set further comprises:
a remote-control receiving module, being configured to receive a control command inputted by the user.

Preferably, the time scaling unit is disposed inside the MCU.

The playing progress indicating method for time-shifted television and the TV set of the present invention provide a very intuitive time progress indicator for the user, and can conveniently calculate a time value indicated by the program time-shifted progress indicia by use of the time scaling unit. Therefore, the playing progress indicating method for time-shifted television and the TV set of the present invention are intuitive and convenient to use.

### BRIEF DESCRIPTION OF THE DRAWINGS

Fig. 1 is a schematic view of a time-shifted television program playing progress indicator involved in the present invention;
Fig. 2 is a schematic view of another time-shifted television program playing progress indicator involved in the present invention; and
Fig. 3 is a functional block diagram of a TV set according to the present invention.

Hereinafter, implementations, functional features and advantages of the present invention will be further described with reference to embodiments thereof and the attached drawings.

### DETAILED DESCRIPTION

To make the objectives, technical solutions and advantages of the present invention more evident, the present invention will be detailed hereinbelow with reference to the attached drawings and embodiments thereof. It shall be understood that, the embodiments described herein are only intended to illustrate but not to limit the present invention.

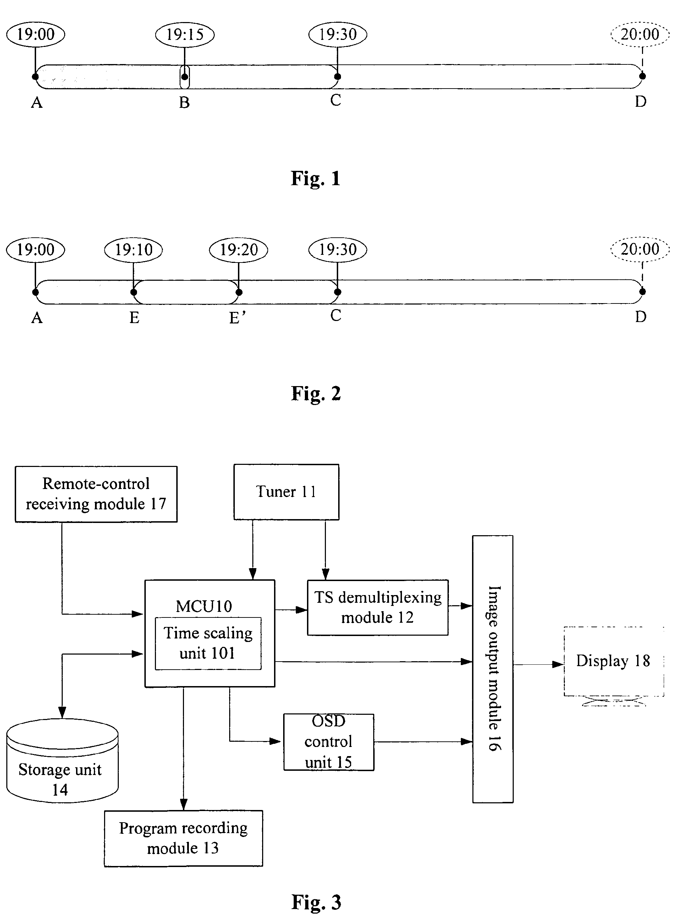

Fig. 1 is a schematic view of a time-shifted television program playing progress indicator involved in a preferred embodiment of a playing progress indicating method for time-shifted television according to the present invention. The program playing progress indicator is mainly suitable for displaying a playing state of a program when the user activates the recording function before playing the program according to a time scheduled in an electronic program guide (EPG) and then plays the program. As shown in Fig. 1, the time-shifted television program playing progress indicator comprises a television program time axis AD, a television program playing progress bar AC and a time-shifted program progress pointer B. The television program time axis AD is a strip-like displaying region and is configured to indicate a total time length of playing multimedia program contents. A node A and a node D of the television program time axis AD represent a starting point when the multimedia program starts to play and a end point when the multimedia program stops playing respectively. And the data of node A and node D are obtained by analyzing the electronic program guide (EPG) information decoded by the TV system.

The program playing progress bar AC is a strip-like displaying region on the program time axis and is configured to indicate a progress of playing carried out by the TV set according to related data transmitted by a television station after playing the television program. A node C is labeled as a first playing time, which represents an actual current time.

The program time-shifted progress pointer B is displayed in the television program playing progress bar AC, and by using of the program time-shifted progress pointer B, a time-shifted playing progress (i.e., an actual playing progress of the program after the user has recorded the program) of the multimedia program can be dynamically displayed. Because the time-shifted function is used, the TV set can only record or play the television program depending on the user's needs after a time specified in the EPG has passed. Therefore, the program time-shifted progress pointer B can only move within a length that has been played and recorded so as to play the program contents corresponding to different time points. The pointer B is labeled as a second playing time; and this time of the pointer B is different from the actual current time, but it is calculated by the TV set according to a length of data AB that has been played. That is, the time of the pointer B is just the actual time when the program has been palyed on TV. Fig. 2 is a schematic view of another time-shifted television program playing progress indicator, illustrating a situation that the user activates the recording function during the playing of the program on TV according to the time scheduled in the EPG. As shown in Fig. 2, a time-shifted program playing progress bar EE' is used in place of the program time-shifted progress pointer B shown in Fig. 1. The program time-shifted playing progress bar EE' is in the television program playing progress bar AC. For the program time-shifted playing progress bar EE', a node E represents a time point where the user activates the time-shifted recording function and a node E' represents a progress of playing the recorded data carried out by the user. Therefore, a time corresponding to the node E is the time when the user starts to record the data, and a time corresponding to the node E' is a second playing time (i.e., the time corresponding to the program time-shifted progress pointer B shown in Fig. 1), which represents the time that the user has been watched the recorded program. Similarly, the aforesaid time is also calculated by the TV set according to a data amount that has been played, namely, it is the actual time when the program has been played on TV.

As described above, a playing progress indicating method for time-shifted television according to the present invention comprises the following steps of:
step a: displaying a television program time axis AD which indicates a total time length of playing multimedia program contents;
step b: displaying a television program playing progress bar AC in the television program time axis AD, wherein the television program playing progress bar AC indicates a progress of playing carried out by the TV set according to related data transmitted by a television station when it is time to play the television program; i.e., a time corresponding to the television program playing progress bar is the current actual time; and
step c: displaying a program time-shifted progress pointer B in the television program playing progress bar AC, and the time corresponding to the program time-shifted progress pointer B is a time value calculated by the TV set according to a length of data that has been played.

Of course, the program time-shifted progress pointer B may also be replaced by the program time-shifted playing progress bar EE' as shown in FIG. 2. For the program time-shifted playing progress bar EE', a node E represents a time point where a user activates the time-shifted recording function and a node E' represents a progress of playing the recorded data carried out by the user.

Fig. 3 is a functional block diagram of a TV set adopting the playing progress indicating method for time-shifted television according to the present invention. In a preferred embodiment of the TV set shown in Fig. 3, an MCU (Microprocessor Control Unit) 10, a tuner 11, a TS demultiplexing module 12, a program recording module 13, a storage unit 14, an OSD (On Screen Display) control unit 15, an image output module 16, a remote-control receiving module 17 and a display device 18 are all commonly used in conventional TV sets, so they will not be further described herein. Compared with the prior art TV sets, the TV set of the present invention further comprises a time scaling unit 101 disposed inside the MCU.

The tuner 11 is configured to choose a desired channel from a number of channels under the control of the MCU 10;
the remote-control receiving module 17 is configured to receive a control instruction inputted by a user; and
the MCU 10 is configured to send a corresponding control command to each of the functional modules of the TV set to control the operation of each of the functional modules.

The TS demultiplexing module 12 is configured to divide a transmission stream into an audio stream, a video stream, PSI (Program Special Information) data and SI (Special Information) data, including information of various electronic program guides (EPGs) transmitted at the related frequency points. The purpose of demultiplexing is to separate data packets of different programs in the TS transmission stream from each other so as to recover digital codes into programs.

The program recording module 13 is configured to back up (i.e., store) received AV television data according to a remote-control input of the user (or an input instruction from the control panel of the TV set).

The storage unit 14 is configured to store information of frequency points (frequency channels), recorded data, EPG data, related time data and so on.

The OSD control unit 15 is configured to display a menu or information on a screen and write a program according to a UI algorithm. This is well known in the art, so no further description will be made herein.

The image output module 16 is configured to control outputting and displaying of video images and OSD images that have been decoded.

The display device 18 comprises a display module and is configured to display a program progress indicator and related OSD.

The time scaling unit 101 is a functional unit in the MCU 10. The time scaling unit 101 is configured to record a current time, calculate a second playing time value, and calculate a time value corresponding to the program time-shifted progress pointer B according to a length of program that has been played on the display and a starting time scheduled in the EPG.

For the TV set according to the present invention, a certain living program needs to be recorded firstly when the time-shifted playing function is activated. Recording of data may be accomplished through the following operations:
(1) a demodulator (not shown) of the television system retrieves the TS transmission stream from a high-frequency carrier of the transported signal code stream and plays the TS transmission stream on the display 18 according to the AV signals decoded by the TS demultiplexing module 12; and
(2) A control command is received and the program is recorded. After the user has inputted the recording control command through the remote control or the control panel button of the TV set, the MCU 10 of the TV set activates the program recording module 13 to record data of the program being played currently and store the data in the storage unit 14; meanwhile, the MCU 10 deactivates the display and the loudspeaker.

As the above operations are well known in the art, no further descriptions will be made again herein. If the user activates the time-shifted playing function when the aforesaid recording is unfinished yet, control of the program playing progress indicator involved in the present invention can be achieved through the following operations.

Firstly, after the TV set receives the time-shifted playing control command inputted by the user, the display invokes the recorded data from the storage unit 14 and then displays the recorded data under the control of the MCU.

After the TV set receives the control command (i.e., when the user inputs 'a time-shifted menu' or carries out other operations, e.g., depressing the rightward/leftward buttons on the remote controller to regulate the playing progress or depressing the upward/downward button on the remote controller to regulate the volume) displayed in the progress bar, the MCU of the TV set activates the program playing progress indicator to display the program playing progress indicator on the screen in the following way (referring to FIG. 1 and FIG. 2 together):
displaying a television program time axis AD comprising a start time and a end time of the program;
displaying a television program playing progress bar AC in the television program time axis AD; and
displaying a program time-shifted progress pointer B in the television program playing progress bar AC. At the same time, the MCU 10 activates the time scaling unit 101 to read the current time (i.e., to obtain a first playing time value) and to transform a length of the program that has been played currently into a time value corresponding to the program time-shifted progress pointer B (i.e., to get a second playing time value through calculation).

What described above are only preferred embodiments of the present invention but are not intended to limit the scope of the present invention. For example, the time scaling unit 101 is not limited to be disposed inside the MCU 10 and unnecessarily needs to record the current time; instead, the time scaling unit 101 may only need to calculate a time value according to the current time and a length of data that has been played. Accordingly, any modifications, equivalent substitutions and improvements that are made within the spirits and principles of the present invention shall also fall within the scope of the present invention.

## Claims

1. A playing progress indicating method for time-shifted television, comprising the following steps of:
step a: displaying a television program time axis which indicates a total time length of playing program contents;
step b: displaying a program playing progress bar in the television program time axis, wherein the program playing progress bar indicates a progress of playing carried out by a TV set according to related data transmitted by a television station when it is time to play the television program; and
step c: displaying a program time-shifted progress indicia in the program playing progress bar, wherein a time corresponding to the program time-shifted progress indicia is a time value calculated by the TV set according to a length of data that has been played.

2. The playing progress indicating method for time-shifted television of Claim 1, wherein the program playing progress bar is a strip-like displaying region coincident with the television program time axis.

3. The playing progress indicating method for time-shifted television of Claim 1, wherein the program time-shifted progress indicia is a program time-shifted progress pointer, and a time corresponding to the program time-shifted progress pointer is a time value calculated by the TV set according to the length of data that has been played.

4. The playing progress indicating method for time-shifted television of Claim 1, wherein the program time-shifted progress indicia is a time-shifted program playing progress bar, of which one end represents a time point where a user activates a time-shifted recording function and the other end represents a time value calculated by the TV set according to the length of data that has been played.

5. A TV set, comprising an MCU, and a program recording module and a storage unit controlled by the MCU, the program recording module being configured to back up received audio & video (AV) TV data into the storage unit according to an instruction from a user, wherein the TV set further comprising a time scaling unit configured to calculate a time value according to a current time and a length of data that has been played.

6. The TV set of Claim 5, further comprising:
a tuner, being configured to choose a desired channel from a number of channels under the control of the MCU.

7. The TV set of Claim 5, further comprising:
a remote-control receiving module, being configured to receive a control command inputted by the user.

8. The TV set of Claim 5, wherein the time scaling unit is disposed inside the MCU.
